# EUROPEAN PATENT SPECIFICATION

(11) **EP 2 102 017 B1**
(45) Date of publication and mention of the grant of the patent: **01.12.2010**
(21) Application number: 06829562.5
(22) Date of filing: 13.12.2006
(51) Int. Cl.: B60C 1/00, C08K 3/34, C08L 9/06

(54) **TIRE AND CROSSLINKABLE ELASTOMERIC COMPOSITION**
REIFEN UND VERNETZBARE ELASTOMERE ZUSAMMENSETZUNG
PNEUMATIQUE ET COMPOSITION ÉLASTOMÈRE RÉTICULABLE

(43) Date of publication of application: 23.09.2009
(73) Proprietor: Pirelli Tyre S.p.A., 20126 Milano (IT); Politecnico di Milano, 20133 Milano (IT)
(72) Inventor: GALIMBERTI, Maurizio, 20126 Milano (IT); MELILLO, Gianluca, 83100 Avellino (IT); GUGLIELMONE, Massimiliano, 20126 Milano (IT); ESPOSITO, Simona, 44100 Ferrara (IT)
(74) Representative: Longoni, Alessandra
(86) International application number: PCT/EP2006/011986
(87) International publication number: WO 2008/071208

(56) References cited:
- EP-A- 1 367 092
- EP-A- 1 418 199
- EP-A- 1 518 895
- EP-A1- 1 288 253
- WO-A-2004/056586
- WO-A-2005/002883
- WO-A-2005/042278
- WO-A-2005/118695
- US-A1- 2005 085 583
- US-B2- 6 818 693

## Description

The present invention relates to a tire and to a crosslinkable elastomeric composition.

More in particular the present invention relates to a tire including at least one structural element obtained by crosslinking a crosslinkable elastomeric composition comprising at least one elastomeric polymer, at least one silica reinforcing filler, at least one at least one coupling agent containing at least one mercapto group, and at least one nanosized layered material.

Moreover, the present invention also relates to a crosslinkable elastomeric composition comprising at least one elastomeric polymer, at least one silica reinforcing filler, at least one coupling agent containing at least one mercapto group, and at least one nanosized layered material, as well as to a crosslinked manufactured article obtained by crosslinking said crosslinkable elastomeric composition.

Furthermore, the present invention also relates to a tire tread band including a crosslinkable elastomeric composition comprising at least one elastomeric polymer, at least one silica reinforcing filler, at least one coupling agent containing at least one mercapto group, and at least one nanosized layered material.

In the rubber industry, in particular that of tires manufacturing, one of the most difficult objects to achieve has always been that of reducing the rolling resistance of the tire, achieving at the same time a good wear resistance and a satisfactory wet skid resistance.

The difficulties for achieving the aforementioned object essentially arise from the fact that the rolling resistance on the one hand and the wear resistance and wet skid resistance on the other hand are affected in an entirely opposite manner by the quantity of reinforcing filler, traditionally mainly constituted by carbon black, used in the crosslinkable elastomeric compositions employed to manufacture the tire, in particular the tire tread band.

In order to reduce the rolling resistance of the tire, in fact, it would be desirable to reduce the amount of the carbon black reinforcing filler used in the crosslinkable elastomeric compositions: in so doing, however, both satisfactory good wear resistance and wet skid resistance were not achieved.

In order to overcome somehow the above drawback of the crosslinkable elastomeric compositions comprising carbon black as a main reinforcing filler, the known art in the field has then suggested to partly or entirely replace carbon black by the so-called "white" fillers, such as gypsum, talc, kaolin, bentonite, titanium dioxide, silicates of various types and especially silica, which replaces carbon black either entirely or partly. In this regard, see for example European Patent EP 501,227.

However, the use of silica as reinforcing filler for elastomeric compositions has several shortcomings. One of the most apparent drawback is a scarce processability of the crosslinkable elastomeric compositions, mainly due to an excessive viscosity. Therefore, to achieve a good dispersion of silica within the elastomeric polymer included in the crosslinkable elastomeric composition, an intense and prolonged thermo-mechanical kneading of the elastomeric composition is necessary. Moreover, the silica particles, having a strong tendency to coalesce even when finely dispersed within the elastomeric polymer, impair storage stability of the crosslinkable elastomeric compositions by forming agglomerates with a remarkable increase of the crosslinkabel elastomeric composition viscosity upon time. Finally, the acid moieties which are present on the silica surface may cause strong interactions with basic substances commonly employed in crosslinkable elastomeric compositions, such as vulcanization accelerators, thus impairing crosslinking efficiency.

To improve compatibility with the elastomeric polymer, silica is usually blended with a coupling agent, for instance a sulfur-containing organosilane product, having two different moieties: the first moiety is able to interact with the silanol groups present on the silica surface, the second moiety promotes interaction with the sulfur-curable elastomeric polymers. The use of a combination of silica and a silane coupling agent, while giving a remarkable beneficial effect on the elastomeric polymers reinforcement, sets, however, a limit to the maximum temperature that may be reached during the compounding step.

Recent approaches to improving dispersion of silica in the crosslinkable elastomeric compositions have been directed to reducing or replacing the use of such silica coupling agents by employing silica dispersing aids, such as monofunctional silica shielding agents (e.g., silica hydrophobating agents that chemically react with the surface silanol groups on the silica particles but are not reactive with the elastomeric polymer) and agents which physically shield the silanol groups, to prevent reagglomeration (flocculation) of the silica particles after compounding. For example, the use of silica dispersing aids, such as alkyl alkoxysilanes, glycols (e.g., diethylene glycol, or polyethylene glycol), fatty acid esters of hydrogenated and non-hydrogenated C₅ and C₆ sugars (e.g., sorbitan oleates), polyoxyethylene derivatives of the fatty acid esters, and fillers such as mica, talc, urea, clay, sodium sulfate, is disclosed in European Patent Applications EP 890,603 and EP 890,606. Such silica dispersing aids are said to be used to replace all or part of silica coupling agents, while improving the processability of the silica-filled elastomeric compositions by reducing their viscosity and reducing silica reagglomeration. However, to achieve a satisfactory crosslinking of the crosslinkable elastomeric compositions, the use of silica dispersing aids includes employing an increased amount of sulfur in a mixing step when crosslinking agents are added to the elastomeric compositions, to replace sulfur that otherwise would have been supplied by a sulfur-containing silica coupling agent.

US Patent Application US 2004/0152811 relates to a sulfur-vulcanizable elastomeric compound, comprising an elastomer optionally having an alkoxysilane terminal group; a reinforcing filler comprising silica, or a mixture thereof with carbon black; an alkyl alkoxysilane; a mercaptosilane silica coupling agent, wherein the weight ratio of the mercaptosilane to the alkyl alkoxysilane is a maximum of 0.4:1; a catalytic amount of a strong organic base; and a cure agent comprising an effective amount of sulfur to achieve a satisfactory cure. The abovementioned elastomeric compound is said to have reduced compound viscosity, improved dispersion of silica and reduced filler flocculation after compounding, reduced hysteresis and improved abrasion resistance after crosslinking.

WO 2004/056586 relates to a tire for two-wheeled vehicles having a belt structure associated with at least one layer of a crosslinked elastomeric material comprising: (a) at least one diene elastomeric polymer, and (b) at least one layered inorganic material having an individual layer thickness of form 0.01 nm to 30 nm.The crosslinked elastomeric material may contain further components, including a silane coupling agent (c) preferably selected among those having at least one hydrolizable silane group.

WO 2005/042278 relates to a tire with at least one structural element obtained by a crosslinkable elastomeric composition comprising: (a) 100 phr of at least one diene elastomeric polymer; (b) from 1 to 50 phr of at least one layered material having an individual layer thickness of from 0.01 nm to 30 nm; (c) from 0.1 phr to 15 phr of at least one methylene donor compound; from 0.4 to 20 phr of at least one methylene acceptor compound. The crosslinkable elastomeric material may contain further components, including a silane coupling agent (f) preferably selected among those having at least one hydrolizable silane group.

WO 2005/002883 relates to a tire with a tread band superimposed circumferentially on a belt structure comprising a radially outer layer designed to come into contact with the ground and a radially inner layer interposed between said radially outer layer and said belt structure. Said radially inner layer includes a crosslinked elastomeric composition comprising (a) at least one diene elastomeric polymer, and (b) at least one layered inorganic material having an individual layer thickness of from 0.01 nm to 30 nm. The crosslinked elastomeric material may contain further components, including a silane coupling agent (d) preferably selected among those having at least one hydrolizable silane group.

WO 2005/118695 relates to a tire with at least one structural element selected from bead filler, sidewall insert, tread underlayer and tread base obtained by a crosslinkable elastomeric composition comprising: (a) a crosslinkable elastomeric base comprising at least about 30 phr of at least one elastomeric polymer including from about 0.05% by weight to about 10% by weight with respect to the total weight of the elastomeric polymer of at least on functional group selected from carboxylic groups, carboxylate groups, anhydride groups, ester groups; and (b) from about 2 phr to about 50 phr of at least one layered inorganic material. The crosslinkable elastomeric material may contain further components, including a silane coupling agent (d) preferably selected among those having at least one hydrolizable silane group.

EP 1 418 199 relates to a tubeless tire in which air permeability is significantly decreased. Such decrease in air permeability is obtained by forming a gas barrier layer on the inner face of the tire body, the gas barrier layer comprising an inorganic layered compound having a particle size of at most 5 µm and an aspect ratio of 50 to 5000.

EP 1 288 253 relates to a rubber composition comprising from 5 to 150 parts by weight of an inorganic filler, from 0 to 30 parts by weight of a silane coupling agent and from 5 to 100 parts by weight of a vegetable oil having an iodine number of at most 130. This rubber composition can reduce rolling resistance.

EP 1 518 895 relates to a tire having a circumferential rubber tread, wherein said tread is a rubber composition comprising: (A)conjugated diene-based elastomers comprised of (1) from 55 to 85 phr of a cis 1,4-polybutadiene rubber with specific characteristics; (2) from 15 to 45 phr of an elastomeric high styrene-containing styrene/butadiene copolymer rubber with specific characteristics, as a composite containing from 1 to 80 parts by weight of at least partially exfoliated, intercalated clay particles per 100 parts by weight of the styrene/butadiene copolymer rubber; (B)from 35 to 110 phr of reinforcing filler comprised of (1) amorphous silica, or (2) high structure carbon black, or (3) from 5 to 105 phr of amorphous silica and from 5 to 105 phr of high structure carbon black. The tread rubber composition is said to have a good balance between traction and treadwear, in particular improved abrasion resistance and durability while maintaining handling and rolling resistance values.

US 2005/085583 relates to a rubber composition containing at least (a) a rubber component, (b) a silica filler, (c) a coupling agent, (d) a nitrogen-containing compound, and (e) a thiuram disulfide having a molecular weight of at least about 400. Such rubber composition shows reduced Tan delta value and abrasion index.

EP 1 367 092 relates to a rubber composition for tire treads comprising 70 parts by weight of a styrenebutadiene rubber, from 5 to 150 parts by weight of a powdery inorganic compound, from 5 to 170 parts by weight of carbon black.

US 6,818,693 relates to a sulfur-curable rubber compound for a tire tread rubber, which compound comprises at least one diene rubber, at least one filler and at least one plasticizer. The rubber compound comprises 5 to 90 phr of at least one layered silicate modified with alkylammonium ions and free of guest molecules that have been polymerized or swelled in by a prior treatment.

The Applicant has faced the problem of providing a tire having a reduced rolling resistance without negatively affecting the wear resistance and wet skid resistance thereof.

The Applicant has now found that it is possible to obtain a tire having the abovementioned properties, by using a crosslinkable elastomeric composition comprising at least one silica reinforcing filler, at least one coupling agent containing at least one mercapto group and at least one nanosized layered material. Said crosslinkable elastomeric composition allows to obtain a tire having low rolling resistance without negatively affecting both the wear resistance and the wet skid resistance thereof. Moreover, the viscosity of the crosslinkable elastomeric compositions is not negatively affected so obtaining a good processability and extrudability of the same. Furthermore, said crosslinked elastomeric compositions show low dinamic elastic modulus (E') at low temperatures and a reduced variation of said dynamic elastic modulus (E') as the temperatures increases (i.e. a reduced "thermoplastic behaviour"). Moreover, said crosslinked elastomeric compositions show improved Payne effect (ΔG') (i.e. a better silica reinforcing filler dispersion). Moreover, the amount of silane coupling agents [e.g., bis(3-triethoxysilylpropyl)disulphide) - TESPD], may be reduced or even eliminated.

According to a first aspect, the present invention relates to a tire comprising at least one structural element including a crosslinked elastomeric material obtained by crosslinking a crosslinkable elastomeric composition comprising:
(a) 100 phr of at least one elastomeric polymer;
(b) from 0.1 phr to 120 phr, preferably from 20 phr to 90 phr of at least one silica reinforcing filler;
(c) from 0.1 phr to 10 phr, preferably from 0.5 phr to 8 phr, of at least one coupling agent containing at least one mercapto group;
(d) from 0.5 phr to 20 phr, preferably from 2 phr to 10 phr, of at least one layered material having an individual layer thickness of from 0.01 nm to 30 nm, preferably of from 0.2 nm to 15 nm, more preferably of from 0.5 nm to 2 nm.

For the purposes of the present description and of the claims which follow, the term "phr" means the parts by weight of a given component of the crosslinkable elastomeric composition per 100 parts by weight of the elastomeric polymer(s).

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

According to one preferred embodiment, the tire comprises:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said structural element is a tread band.

According to a further aspect, the present invention relates to a tire tread band including a crosslinkable elastomeric composition comprising:
(a) 100 phr of at least one elastomeric polymer;
(b) from 0.1 phr to 120 phr, preferably from 20 phr to 90 phr of at least one silica reinforcing filler;
(c) from 0.1 phr to 10 phr, preferably from 0.5 phr to 8 phr, of at least one coupling agent containing at least one mercapto group;
(d) from 0.5 phr to 20 phr, preferably from 2 phr to 10 phr, of at least one layered material having an individual layer thickness of from 0.01 nm to 30 nm, preferably of from 0.2 nm to 15 nm, more preferably of from 0.5 nm to 2 nm.

According to a further aspect, the present invention relates to a crosslinkable elastomeric composition comprising:
(a) 100 phr of at least one elastomeric polymer;
(b) from 0.1 phr to 120 phr, preferably from 20 phr to 90 phr of at least one silica reinforcing filler;
(c) from 0.1 phr to 10 phr, preferably from 0.5 phr to 8 phr, of at least one coupling agent containing at least one mercapto group;
(d) from 0.5 phr to 20 phr, preferably from 2 phr to 10 phr, of at least one layered material having an individual layer thickness of from 0.01 nm to 30 nm, preferably of from 0.2 nm to 15 nm, more preferably of from 0.5 nm to 2 nm.

According to a further preferred embodiment, said crosslinkable elastomeric composition may further comprise (e) at least one silane coupling agent, other than said at least one coupling containing at least one mercapto group (c).

According to a further aspect, the present invention relates to a crosslinked manufactured article obtained by crosslinking a crosslinkable elastomeric composition above reported.

According to one preferred embodiment, said at least one elastomeric polymer (a) may be selected, for example, from (a₁) diene elastomeric polymers which are commonly used in sulfur-crosslinkable elastomeric compositions, that are particularly suitable for producing tires, that is to say from elastomeric polymers or copolymers with an unsaturated chain having a glass transition temperature (T_{g}) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Preferably, the obtained polymers or copolymers contain said at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene, or isoprene, are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomeric polymer (a₁) may be selected, for example, from: cis-1,4-polyisoprene (natural or synthetic, preferably natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

Alternatively, said at least one elastomeric polymer (a) may be selected, for example, from (a₂) elastomeric polymers of one or more monoolefins with an olefinic comonomer or derivatives thereof. The monoolefins may be selected, for example, from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); poly-isobutene; butyl rubbers; halobutyl rubbers, in particular chlorobutyl or bromobutyl rubbers; or mixtures thereof.

Mixtures of the abovementioned diene elastomeric polymers (a₁) with the abovementioned elastomeric polymers (a₂), may also be used.

According to one preferred embodiment, said crosslinkable elastomeric composition may comprise at least 10% by weight, preferably from 20% by weight to 100% by weight, with respect to the total weight of the at least one elastomeric polymer (a), of styrene/1,3-butadiene copolymers, in particular of styrene/1,3-butadiene copolymers having a high vinyl content (e.g., higher than or equal to 40% by weight with respect to the total copolymers weight).

The above reported elastomeric polymers (a) may optionally be functionalized by reaction with suitable terminating agents or coupling agents. In particular, the diene elastomeric polymers (a₁) obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers (a) may optionally include at least one functional group which may be selected, for example, from: carboxylic groups, carboxylate groups, anhydride groups, ester groups, epoxy groups, or mixtures thereof.

According to one preferred embodiment, said at least one silica reinforcing filler (b) may be selected, for example, from: pyrogenic silica, precipitated amorphous silica, wet silica (hydrated silicic acid), dry silica (anhydrous silicic acid), fumed silica, calcium silicate, or mixtures thereof. Other suitable fillers include aluminum silicate, magnesium silicate, or mixtures thereof. Among these, precipitated amorphous wet-process, hydrated silicas are preferred. These silicas are so-called because they are produced by a chemical reaction in water, from which they are precipitated as ultrafine, spherical particles. These primary particles strongly associate into aggregates, which in turn combine less strongly into agglomerates. The BET surface area, as measured according to Standard ISO 5794-1:2005, gives the best measure of the reinforcing character of different silicas. Silica reinforcing fillers which may be advantageously used according to the present invention, preferably have a surface area of from 32 m²/g to 400 m²/g, more preferably of from 100 m²/g to 250 m²/g, still more preferably of from 150 m²/g to 220 m²/g. The pH of said silica reinforcing fillers is, generally, of from 5.5 to 7.0, or slightly over, preferably of from 5.5 to 6.8.

Examples of silica reinforcing fillers which may be used according to the present invention and are available commercially are the products known by the name of Hi-Sil^{®} 190, Hi-Sil^{®} 210, Hi-Sil^{®} 215, Hi-Sil^{®} 233, Hi-Sil^{®} 243, from PPG Industries (Pittsburgh, Pa.); or the products known by the name of Ultrasil^{®} VN2, Ultrasil^{®} VN3 from Degussa; or the product known under the name of Zeosil^{®} 1165MP from Rhodia.

According to one preferred embodiment, said at least one coupling agent containing at least one mercapto group (c), may be selected, for example, from compounds having the following general formula (I): 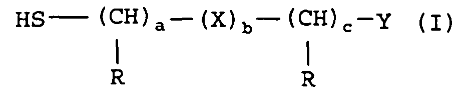 wherein:
- a + c is an integer of from 1 to 36, extremes included;
- R represents a hydrogen atom; a linear or branched C₁-C₆ alkyl group; a COOH group;
- X represents an oxygen atom; a sulfur atom; a NH group;
- when X represent an oxygen atom or a NH group, b is 0 or 1;
- when X represents a sulfur atom, b is 0, or an integer of from 1 to 4, extremes included;
- Y represents a polar group which is selected from: silane groups; acid groups; ester groups; amide groups; imide groups; nitro groups; hydroxy groups; mercapto groups; on condition that, when Y represents a mercapto group, at least one of the R substituents is a COOH group.

According to one preferred embodiment, said at least one coupling agent containing at least one mercapto group (c) may be selected from mercaptosilanes, mercaptans, or mixtures thereof. Mercaptosilanes are particularly preferred.

According to a further preferred embodiment, said mercaptosilanes may be selected, for example, from compounds having the following general formula (II): 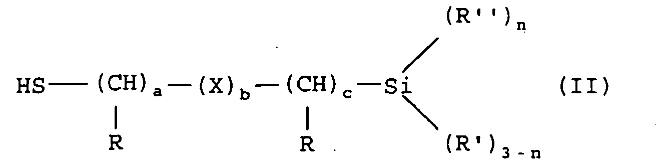 wherein:
- a, b, c, R and X, have the same meanings as above disclosed;
- R" represents a halogen atom such as, for example, chlorine, bromine, iodine, preferably chlorine; or a C₁-C₁₀ alkoxy group;
- R', which may be equal or different from each other, are selected from: C₁-C₃₆ alkyl groups; C₆-C₂₀ aryl groups; C₇-C₃₀ alkylaryl or arylalkyl groups; C₅-C₃₀ cycloaliphatic groups;
- n is an integer of from 1 to 3, extremes included.

Preferably, R" represents a C₁-C₃ alkoxy group; R represents a hydrogen atom; b is 0; a + c is 3; and n is 3.

Specific examples of mercaptosilanes having general formula (II) which may be advantageously used according to the present invention are: 1-mercaptomethyltriethoxysilane, 2-mercaptoethyltriethoxysilane, 3-mercaptopropyltriethoxysilane, 3-mercaptopropylmethyldiethoxysilane, 2-mercaptoethyltripropoxysilane, 18-mercaptooctadecyldiethoxychlorosilane, or mixture thereof. 3-Mercaptopropyltriethoxysilane is particularly preferred.

According to a further preferred embodiment, said mercaptanes may be selected, for example, from compounds having the following general formula (III): 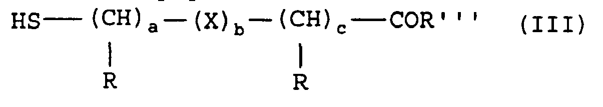 wherein:
- a, b, c, R and X, have the same meanings as above disclosed;
- R"' represents:
   - a ORₐ group, wherein Rₐ represents a hydrogen atom; a metal such as, for example, lithium, sodium, potassium, magnesium, calcium; a linear or branched or cyclic C₁-C₃₆ alkyl group; a C₆-C₂₀ aryl group; a C₇-C₃₀ alkylaryl or arylalkyl group; a C₅-C₃₀ cycloaliphatic group; an ammonium ion;
   - a NR₁R₂ group, wherein R₁ and R₂, represents a linear or branched or cyclic C₁-C₃₆ alkyl group; a C₆-C₂₀ aryl group; a C₇-C₃₀ alkylaryl or arylalkyl group; a C₅-C₃₀ cycloaliphatic group.

Preferably, R is a hydrogen atom; b is 0; a +c is an integer of from 3 to 12, extremes included; R"' represent a ORₐ wherein Rₐ is a hydrogen atom.

Specific example of mercaptans having general formula (III) which may be advantageously used according to the present invention are: thioglycolic acid, 2-mercaptopropionic acid (thiolactic acid), 3-mercaptopropionic acid, 4-mercaptobutyric acid, mercaptoundecanoic acid, mercaptooctadecanoic acid, 2-mercaptosuccinic acid, 3,4-dimercaptosuccinic acid, 3-(3-mercaptopropylsulfanyl)propionic acid, 3-(3-mercaptopropyloxy)propionic acid, alkali, alkaline earth or ammonium salts thereof, or mixtures thereof. Mercaptoundecanoic acid is preferred.

According to one preferred embodiment, said at least one layered material (d) may be selected, for example, from: phyllosilicates such as, for example, smectites, for example, montmorillonite, bentonite, nontronite, beidellite, volkonskoite, hectorite, saponite, sauconite; vermiculite; halloisite; sericite; aluminate oxides; hydrotalcite; or mixtures thereof. Montmorillonite is particularly preferred. These layered material generally contains exchangeable ions such as sodium (Na⁺), calcium (Ca²⁺), potassium (K⁺), magnesium (Mg²⁺), hydroxide (HO⁻), or carbonate (CO₃²⁻), present at the interlayer surfaces.

In order to render the layered material (d) more compatible with the elastomeric polymer(s) said at least one layered material (d) may be treated with at least one compatibilizing agent. Said compatibilizing agent is capable of undergoing ion exchange reactions with the ions present at the interlayers surfaces of the layerd material.

According to one preferred embodiment, said at least one compatibilizing agent may be selected, for example, from the quaternary ammonium or phosphonium salts having the following general formula (IV): 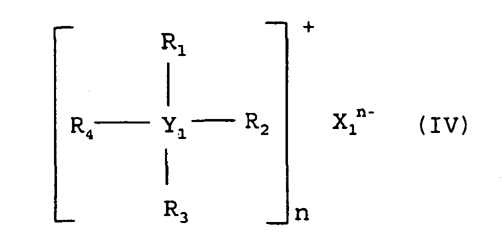 wherein:
- Y₁ represents N or P;
- R₁, R₂, R₃ and R₄, which may be equal or different from each other, represent a linear or branched C₁-C₂₀ alkyl or hydroxyalkyl group; a linear or branched C₁-C₂₀ alkenyl or hydroxyalkenyl group; a group -R₅-SH or -R₅-NH wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulfur;
- X₁ⁿ⁻ represents an anion such as the chloride ion, the sulphate ion or the phosphate ion;
- n represents 1, 2 or 3.

Said layered material (d) may be treated with the compatibilizing agent before adding it to the elastomeric polymer(s). Alternatively, said layered material (d) and the compatibilizing agent may be separately added to the elastomeric polymer(s).

The treatment of the layered material (d) with the compatibilizing agent may be carried out according to known methods such as, for example, by an ion exchange reaction between the layered material and the compatibilizer: further details are described, for example, in United States Patents US 4,136,103, US 5,747,560, or US 5,952,093.

Examples of layered material (d) which may be used according to the present invention and are available commercially are the products known by the name of Dellite^{®} 67G, Dellite^{®} 72T, Dellite^{®} 43B, from Laviosa Chimica Mineraria S.p.A.; Cloisite^{®} 25A, Cloisite^{®} 10A, Cloisite^{®} 15A, Cloisite^{®} 20A, from Southern Clays; Nanofil^{®} 5, Nanofil^{®} 8, Nanofil^{®} 9, from Süd Chemie; Bentonite^{®} AG/3 from Dal Cin S.p.A.

As disclosed above, said crosslinkable elastomeric composition may further comprise (e) at least one silane coupling agent, other than said at least one coupling agent containing at least one mercapto group (c).

According to one preferred embodiment, said at least one silane coupling agent (e) may be selected from those having at least one hydrolizable silane group which may be identified, for example, by the following general formula (V):

(R₅)₃Si-CₙH₂ₙ-R₆ (V)

wherein the groups R₅, which may be equal or different from each other, are selected from: alkyl, alkoxy or aryloxy groups or from halogen atoms, on condition that at least one of the groups R₅ is an alkoxy or aryloxy group; n is an integer of from 1 to 6, extremes included; R₆ is a group selected from: nitroso, amino, epoxide, vinyl, imide, chloro, -(S)ₘCₙH₂ₙ-Si-(R₅)₃, or -S-COR₅, in which m and n are integers of from 1 to 6, extremes included and the groups R₅ are defined as above.

Among the silane coupling agents (e) that are particularly preferred are bis(3-triethoxysilylpropyl)tetrasulphide or bis(3-triethoxysilylpropyl)-disulphide. Said silane coupling agents (e) may be used as such or as a suitable mixture with an inert filler (for example carbon black) so as to facilitate their incorporation into the elastomeric polymer.

According to one preferred embodiment, said at least one silane coupling agent (e) is present in the crosslinkable elastomeric composition in an amount of from 0 phr to 10 phr, preferably of from 0.5 phr to 5 phr.

At least one additional reinforcing filler may advantageously be added to the above reported crosslinkable elastomeric composition, in an amount generally of from 0 phr to 70 phr, preferably of from 20 phr to 50 phr. The reinforcing filler may be selected from those commonly used for crosslinked manufactured articles, in particular for tires, such as, for example, carbon black, calcium carbonate, kaolin, or mixtures thereof.

The types of carbon black which may be used according to the present invention may be selected from those conventionally used in the production of tires, generally having a surface area of not less than 20 m²/g (determined by CTAB absorption as described in Standard ISO 6810:1995).

The crosslinkable elastomeric composition above reported may be vulcanized according to known techniques, in particular with sulfur-based vulcanizing systems commonly used for elastomeric polymers. To this end, in the crosslinkable elastomeric composition, after one or more steps of thermomechanical processing, a sulfur-based vulcanizing agent is incorporated together with vulcanization accelerators. In the final processing step, the temperature is generally kept below 140°C, so as to avoid any undesired pre-crosslinking phenomena.

The vulcanizing agent most advantageously used is sulfur, or molecules containing sulfur (sulfur donors), with accelerators and activators known to those skilled in the art.

Activators that are particularly effective are zinc compounds, and in particular ZnO, ZnCO₃ zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂ or mixtures thereof.

Accelerators that are commonly used may be selected from: dithiocarbamates, guanidine, thiourea, thiazoles, sulphenamides, thiurams, amines, xanthates, or mixtures thereof.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, anti-ozone agents, modifying resins, or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges from 0 phr to 70 phr, preferably from of 5 phr to 30 phr.

The above reported crosslinkable elastomeric composition may be prepared by mixing together the elastomeric polymers, the compound containg at least one mercapto group, and the layered material, with the silica reinforcing filler and the other compounds optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twinscrew type.

The present invention will now be illustrated in further detail by means of an illustrative embodiment, with reference to the attached Fig. 1 which is a view in cross section of a portion of a tire made according to the invention.

"a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures comprising at least one bead core (102) and at least one bead filler (104). The association between the carcass ply (101) and the bead core (102) is achieved here by folding back the opposite lateral edges of the carcass ply (101) around the bead core (102) so as to form the so-called carcass back-fold (101a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680 or EP 928,702, both in the name of the Applicant). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction. The core (102) is enclosed in a bead (103), defined along an inner circumferential edge of the tire (100), with which the tire engages on a rim (not represented in Fig. 1) forming part of a vehicle wheel. The space defined by each carcass back-fold (101a) contains a bead filler (104) wherein the bead core (102) is embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of a crosslinked elastomeric composition.

A side wall (108) is also applied externally onto the carcass ply (101), this side wall extending, in an axially external position, from the bead (103) to the end of the belt structure (106).

A tread band (109), which may be made according to the present invention, whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A tread underlayer (111) is placed between the belt structure (106) and the tread band (109).

As represented in Fig. 1, the tread underlayer (111) may have uniform thickness.

Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a rubber layer (112) generally known as a liner, which provides the necessary impermeability to the inflation air of the tire, may also be provided in an inner position relative to the carcass ply (101)'.

The process for producing the tire according to the present invention may be carried out according to techniques and using apparatus that are known in the art, as described, for example, in European Patents EP 199,064, or in United States Patent US 4,872,822, or US 4,768,937, said process including manufacturing the crude tire, and subsequently moulding and vulcanizing the crude tire.

Although the present invention has been illustrated specifically in relation to a tire, other crosslinked elastomeric manufactured products that may be produced according to the invention may be, for example, conveyor belts, drive belts, or hoses.

The present invention will be further illustrated below by means of a number of preparation examples, which are given for purely indicative purposes and without any limitation of this invention.

### EXAMPLES 1-2

### Preparation of the elastomeric compositions

The elastomeric compositions given in Table 1 were prepared as follows (the amounts of the various components are given in phr).

All the components, except sulfur and accelerators (DPG80 and CBS), were mixed together in an internal mixer (model Pomini PL 1.6) for about 5 min (1^{st} Step). As soon as the temperature reached 145±5°C, the elastomeric material was discharged. The sulfur and accelerators (DPG and CBS), were then added and mixing was carried out in an open roll mixer (2^{nd} Step).

**TABLE 1**

| EXAMPLE | 1 (*) | 2 |
|---|---|---|
| 1^{st} STEP | | |
| S-SBR | 80 | 80 |
| IR | 20 | 20 |
| Zinc oxide | 2.5 | 2.5 |
| Antioxidant | 2.0 | 2.0 |
| Silica | 55 | 52 |
| Stearic acid | 2.0 | 2.0 |
| Aromatic oil | 10 | 10 |
| TESPD | 4.4 | 2.55 |
| Silquest^{®} A-1891 | - | 1.85 |
| Dellite^{®} 67G | - | 3.0 |

| 2^{nd} STEP | | |
|---|---|---|
| Sulfur | 1.2 | 1.2 |
| DPG80 | 1.88 | 1.88 |
| CBS | 2.0 | 2.0 |

| | | |
|---|---|---|
| (*) : comparative. S-SBR: solution-prepared styrene/1,3-butadiene copolymer having a vinyl content of 50% by weight and a styrene content of 25% by weight, with respect to the total copolymer weight (Buna^{®} VLS 5025-0 HM - Lanxess); IR: cis-1,4-polyisoprene (SKI - Nizhnekamskneftechim Export); Antioxidant: phenyl-p-phenylenediamine (6-PPD - Akzo Nobel); Silica: Zeosil^{®} 1165 MP (Rhodia); TESPD: bis(3-triethoxysilylpropyl)disulphide (Degussa-Hüls) ; Silquest^{®} A-1891: 3-mercaptopropyltriethoxysilane (GE Silicones); Dellite^{®} 67G: montmorillonite belonging to the smectite family modified with quaternary ammonium salt (Laviosa Chimica Mineraria S.p.A.); DPG80 (accelerator):diphenyl guanidine (Rhenogran^{®} DPG80 - Rhein Chemie); CBS (accelerator): N-cyclohexyl-2-benzothiazylsulphenamide (Vulkacit^{®} CZ/C - Lanxess). | | |

The Mooney viscosity ML(1+4) at 100°C was measured according to Standard ISO 289-1:1994, on the non-crosslinked elastomeric compositions obtained as described above. The results obtained are given in Table 2.

Said crosslinkable elastomeric compositions were also subjected to MDR rheometric analysis using a Monsanto MDR rheometer, the tests being carried out at 170°C, for 20 min, at an oscillation frequency of 1.66 Hz (100 oscillations per minute) and an oscillation amplitude of ± 0.5°. The results obtained are given in Table 2.

The static mechanical properties as well as hardness in IRHD degrees (at 23°C and at 70°C) according to Standard ISO 37:1994 were measured on samples of the abovementioned elastomeric compositions vulcanized at 170°C, for 10 min. The results obtained are given in Table 2.

Table 2 also shows the dynamic mechanical properties, measured using an Instron dynamic device in the traction-compression mode according to the following methods. A test piece of the crosslinked elastomeric composition (vulcanized at 170°C, for 10 min) having a cylindrical form (length = 25 mm; diameter = 12 mm), compression-preloaded up to a 10% longitudinal deformation with respect to the initial length, and kept at the prefixed temperature (10°C, 23°C, 70°C, and 100°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Moreover, Table 2 also shows the Payne effect (ΔG'), measured using a Monsanto R.P.A. 2000 rheometer. For this purpose, cylindrical test specimens with weights in the range of from 4.5 g to 5.5 g were obtained by punching from the crosslinked elastomeric composition (vulcanized at 170°C, for 30 min), and were subjected to the measurement of (G') at 70°C, frequency 10 Hz, deformation 3% and 10%. The results obtained are given in Table 2.

Table 2 also show the DIN abrasion: the data (expressed in mm³) correspond to the amount of elastomeric composition removed by operating under the standard conditions given in DIN standard 53516.

**TABLE 2**

| EXAMPLE | 1 (*) | 3 |
|---|---|---|
| Mooney viscosity ML (1+4) | 80.0 | 81.1 |
| MDR RHEOMETRIC ANALYSIS (20 min, 70°C) | | |
| TS1 | 0.97 | 0.77 |
| TS2 | 2.49 | 0.96 |
| T90 | 8.83 | 8.90 |
| STATIC MECHANICAL PROPERTIES | | |
| 100% Modulus (CA1) (MPa) | 2.05 | 2.21 |
| 300% Modulus (CA3) (MPa) | 8.08 | 11.26 |
| CA3/CA1 | 3.94 | 5.10 |
| Stress at break (MPa) | 15.41 | 13.68 |
| Elongation at break (%) | 499.5 | 371.9 |
| IRHD hardness (23°C) | 70.2 | 60.3 |
| IRHD hardness (70°C) | 63.8 | 58.7 |
| DYNAMIC MECHANICAL PROPERTIES (Instron) | | |
| E' (10°C) | 13.36 | 10.97 |
| E' (23°C) | 9.01 | 7.52 |
| E' (70°C) | 5.90 | 5.28 |
| E' (100°C) | 5.44 | 5.03 |
| ΔE' (10°C -100°C) | 7.92 | 5.94 |
| Tan delta (10°C) | 0.614 | 0.605 |
| Tan delta (23°C) | 0.346 | 0.304 |
| Tan delta (70°C) | 0.133 | 0.105 |
| Tan delta (100°C) | 0.115 | 0.085 |
| DYNAMIC MECHANICAL PROPERTIES (R.P.A. 2000 rheometer) | | |
| ΔG' (3% - 10%) (MPa) | 0.44 | 0.28 |
| DIN abrasion (mm³) | 145.3 | 125.1 |

| | | |
|---|---|---|
| (*) : comparative. | | |

### EXAMPLES 3-4

### Preparation of the elastomeric compositions

The elastomeric compositions given in Table 3 were prepared as follows (the amounts of the various components are given in phr).

All the components, except sulfur and accelerators (DPG80 and CBS), were mixed together in an internal mixer (model Pomini PL 1.6) for about 5 min (1^{st} Step). As soon as the temperature reached 145±5°C, the elastomeric material was discharged. The sulfur and accelerators (DPG and CBS), were then added and mixing was carried out in an open roll mixer (2^{nd} Step).

**TABLE 3**

| EXAMPLE | 3 (*) | 4 |
|---|---|---|
| 1^{st} STEP | | |
| S-SBR | 100 | 100 |
| Zinc oxide | 2.5 | 2.5 |
| Antioxidant | 2.0 | 2.0 |
| Silica | 60 | 57 |
| Stearic acid | 2.0 | 2.0 |
| Aromatic oil | 10 | 10 |
| TESPD | 4.8 | 4.8 |
| Mercaptoundecanoic acid | - | 1.85 |
| Dellite^{®} 67G | - | 3.0 |
| 2^{nd} STEP | | |
| Sulfur | 1.2 | 1.2 |
| DPG80 | 1.88 | 1.88 |
| CBS | 2.0 | 2.0 |

| | | |
|---|---|---|
| (*) : comparative. S-SBR: solution-prepared styrene/1,3-butadiene copolymer having a vinyl content of 50% by weight and a styrene content of 25% by weight, with respect to the total copolymer weight (Buna^{®} VLS 5025-0 HM - Lanxess); Antioxidant: phenyl-p-phenylenediamine (6-PPD - Akzo Nobel); Silica: Zeosil^{®} 1165 MP (Rhodia); TESPD: bis(3-triethoxysilylpropyl)disulphide (Degussa-Hüls); Mercaptoundecanoic acid: (Sigma-Aldrich); Dellite^{®} 67G: montmorillonite belonging to the smectite family modified with quaternary ammonium salt (Laviosa Chimica Mineraria S.p.A.); DPG80 (accelerator):diphenyl guanidine (Rhenogran^{®} DPG80 - Rhein Chemie); CBS (accelerator): N-cyclohexyl-2-benzothiazylsulphenamide (Vulkacit^{®} CZ/C - Lanxess). | | |

The Mooney viscosity ML(1+4) at 100°C was measured according to Standard ISO 289-1:1994, on the non-crosslinked elastomeric compositions obtained as described above. The results obtained are given in Table 4.

Said crosslinkable elastomeric compositions were also subjected to MDR rheometric analysis using a Monsanto MDR rheometer, the tests being carried out at 170°C, for 20 min, at an oscillation frequency of 1.66 Hz (100 oscillations per minute) and an oscillation amplitude of ± 0.5°. The results obtained are given in Table 4.

The static mechanical properties as well as hardness in IRHD degrees (at 23°C and at 70°C) according to Standard ISO 37:1994 were measured on samples of the abovementioned elastomeric compositions vulcanized at 170°C, for 10 min. The results obtained are given in Table 4.

Table 4 also shows the dynamic mechanical properties, measured using an Instron dynamic device in the traction-compression mode according to the following methods. A test piece of the crosslinked elastomeric composition (vulcanized at 170°C, for 10 min) having a cylindrical form (length = 25 mm; diameter = 12 mm), compression-preloaded up to a 10% longitudinal deformation with respect to the initial length, and kept at the prefixed temperature (10°C, 23°C, 70°C, and 100°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Moreover, Table 4 also shows the Payne effect (i.e. ΔG'), measured using a Monsanto R.P.A. 2000 rheometer. For this purpose, cylindrical test specimens with weights in the range of from 4.5 g to 5.5 g were obtained by punching from the crosslinked elastomeric composition (vulcanized at 170°C, for 30 min), and were subjected to the measurement of (G') at 70°C, frequency 10 Hz, deformation 3% and 10%. The results obtained are given in Table 4.

Table 4 also show the DIN abrasion: the data (expressed in mm³) correspond to the amount of elastomeric composition removed by operating under the standard conditions given in DIN standard 53516.

**TABLE 4**

| EXAMPLE | 3 (*) | 4 |
|---|---|---|
| Mooney viscosity ML (1+4) | 85.5 | 87.6 |
| MDR RHEOMETRIC ANALYSIS (20 min, 70°C) | | |
| TS1 | 0.63 | 1.20 |
| TS2 | 2.16 | 1.44 |
| T90 | 12.45 | 10.89 |
| STATIC MECHANICAL PROPERTIES | | |
| 100% Modulus (CA1) (MPa) | 2.48 | 2.50 |
| 300% Modulus (CA3) (MPa) | 9.47 | 10.53 |
| CA3/CA1 | 3.81 | 4.21 |
| Stress at break (MPa) | 12.09 | 13.57 |
| Elongation at break (%) | 370.7 | 414.1 |
| IRHD hardness (23°C) | 74.9 | 70.6 |
| IRHD hardness (70°C) | 67.0 | 61.0 |
| DYNAMIC MECHANICAL PROPERTIES (Instron) | | |
| E' (10°C) | 17.36 | 15.40 |
| E' (23°C) | 12.22 | 10.76 |
| E' (70°C) | 7.12 | 6.57 |
| E' (100°C) | 6.35 | 5.95 |
| ΔE' (10°C -100°C) | 11.01 | 9.60 |
| Tan delta (10°C) | 0.608 | 0.617 |
| Tan delta (23°C) | 0.378 | 0.383 |
| Tan delta (70°C) | 0.161 | 0.145 |
| Tan delta (100°C) | 0.149 | 0.118 |
| DYNAMIC MECHANICAL PROPERTIES (R.P.A. 2000 rheometer) | | |
| ΔG' (3% - 10%) (MPa) | 0.58 | 0.45 |
| DIN abrasion (mm³) | 135.7 | 133.4 |

| | | |
|---|---|---|
| (*) : comparative. | | |

### EXAMPLES 5-7

### Preparation of the elastomeric compositions

The elastomeric compositions given in Table 5 were prepared as follows (the amounts of the various components are given in phr).

All the components, except sulfur and accelerators (DPG80 and CBS), were mixed together in an internal mixer (model Pomini PL 1.6) for about 5 min (1^{st} Step). As soon as the temperature reached 145±5°C, the elastomeric material was discharged. The sulfur and accelerators (DPG and CBS), were then added and mixing was carried out in an open roll mixer (2^{nd} Step) .

**TABLE 5**

| EXAMPLE | 5 (*) | 6 | 7 |
|---|---|---|---|
| 1^{st} STEP | | | |
| S-SBR | 110 | 110 | 110 |
| BR | 20 | 20 | 20 |
| Zinc oxide | 2.5 | 2.5 | 2.5 |
| Antioxidant | 2.0 | 2.0 | 2.0 |
| Silica | 65 | 60 | 60 |
| N375 | 10 | 10 | 10 |
| Stearic acid | 2.0 | 2.0 | 2.0 |
| Aromatic oil | 12 | 12 | 12 |
| TESPD | 5.45 | 3.6 | - |
| Silquest^{®} A- 1891 | - | 1.85 | 1.85 |
| Dellite^{®} 67G | - | 5.0 | 5.0 |
| Wax | 1.0 | 1.0 | 1.0 |
| TMQ | 1.0 | 1.0 | 1.0 |

| 2^{nd} STEP | | | |
|---|---|---|---|
| CBS | 1.4 | 1.4 | 1.4 |
| DPG80 | 2.0 | 2.0 | 2.0 |
| Sulfur | 1.7 | 1.7 | 1.7 |

| | | | |
|---|---|---|---|
| (*) : comparative. S-SBR: solution styrene/1,3-butadiene copolymer having a styrene content of 36% by weight and a vinyl content of 27.5% by weight, with respect to the total copolymer weight and containing 37.5 phr of aromatic oil (HP752 - Japan Synthetic Rubber); BR: polybutadiene (Europrene Neocis^{®} - Polimeri Europa); Antioxidant: phenyl-p-phenylenediamine (6-PPD - Akzo Nobel); Silica: Zeosil^{®} 1165 MP (Rhodia); N375: carbon black (Columbian); TESPD: bis(3-triethoxysilylpropyl)disulphide (Degussa-Hüls); Silquest^{®} A-1891: 3-mercaptopropyltriethoxysilane (GE Silicones); Dellite^{®} 67G: montmorillonite belonging to the smectite family modified with quaternary ammonium salt (Laviosa Chimica Mineraria S.p.A.); Wax: composition of microcrystalline wax (Antilux^{®} 654 - Lanxess); CBS (accelerator): N-cyclohexyl-2-benzothiazylsulphenamide (Vulkacit^{®} CZ/C - Lanxess); DPG80 (accelerator):diphenyl guanidine (Rhenogran^{®} DPG80 - Rhein Chemie). | | | |

The Mooney viscosity ML(1+4) at 100°C was measured according to Standard ISO 289-1:1994, on the non-crosslinked elastomeric compositions obtained as described above. The results obtained are given in Table 6.

Said crosslinkable elastomeric compositions were also subjected to MDR rheometric analysis using a Monsanto MDR rheometer, the tests being carried out at 170°C, for 20 min, at an oscillation frequency of 1.66 Hz (100 oscillations per minute) and an oscillation amplitude of ± 0.5°. The results obtained are given in Table 6.

The static mechanical properties as well as hardness in IRHD degrees (at 23°C and at 70°C) according to Standard ISO 37:1994 were measured on samples of the abovementioned elastomeric compositions vulcanized at 170°C, for 10 min. The results obtained are given in Table 6.

Table 6 also shows the dynamic mechanical properties, measured using an Instron dynamic device in the traction-compression mode according to the following methods. A test piece of the crosslinked elastomeric composition (vulcanized at 170°C, for 10 min) having a cylindrical form (length = 25 mm; diameter = 12 mm), compression-preloaded up to a 10% longitudinal deformation with respect to the initial length, and kept at the prefixed temperature (10°C, 23°C, 70°C, and 100°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Moreover, Table 6 also shows the Payne effect (ΔG') measured using a Monsanto R.P.A. 2000 rheometer. For this purpose, cylindrical test specimens with weights in the range of from 4.5 g to 5.5 g were obtained by punching from the crosslinked elastomeric composition (vulcanized at 170°C, for 30 min), and were subjected to the measurement of (G') at 70°C, frequency 10 Hz, deformation 3% and 10%. The results obtained are given in Table 2.

Table 6 also show the DIN abrasion: the data (expressed in mm³) correspond to the amount of elastomeric composition removed by operating under the standard conditions given in DIN standard 53516.

**TABLE 6**

| EXAMPLE | 5(*) | 6 | 7 |
|---|---|---|---|
| Mooney viscosity ML (1+4) | 79.2 | 107.0 | 87.5 |
| MDR RHEOMETRIC ANALYSIS (20 min, 70°C) | | | |
| TS1 | 0.49 | 0.67 | 0.47 |
| TS2 | 1.35 | 0.81 | 0.67 |
| T90 | 4.48 | 3.84 | 4.84 |
| STATIC MECHANICAL PROPERTIES | | | |
| 100% Modulus (CA1) (MPa) | 2.46 | 3.15 | 2.87 |
| 300% Modulus (CA3) (MPa) | 11.29 | 14.29 | 15.43 |
| CA3/CA1 | 4.59 | 4.54 | 5.38 |
| Stress at break (MPa) | 16.52 | 16.94 | 17.51 |
| Elongation at break | 439.9 | 378.0 | 359.9 |
| IRHD hardness (23°C) | 76.6 | 69.2 | 69 |
| IRHD hardness (70°C) | 65.2 | 62.8 | 64.3 |
| DYNAMIC MECHANICAL PROPERTIES (Instron) | | | |
| E' (10°C) | 15.69 | 12.88 | 11.18 |
| E' (23°C) | 11.33 | 9.58 | 8.40 |
| E' (70°C) | 6.28 | 5.90 | 5.94 |
| E' (100°C) | 5.70 | 5.43 | 5.61 |
| ΔE' (10°C - 100°C) | 9.99 | 7.45 | 5.57 |
| Tan delta (10°C) | 0.591 | 0.555 | 0.541 |
| Tan delta (23°C) | 0.418 | 0.365 | 0.323 |
| Tan delta (70°C) | 0.196 | 0.169 | 0.146 |
| Tan delta (100°C) | 0.143 | 0.123 | 0.128 |
| DYNAMIC MECHANICAL PROPERTIES (R.P.A. 2000 rheometer) | | | |
| ΔG' (3% - 10%) (MPa) | 0.74 | 0.42 | 0.60 |
| DIN abrasion (mm³) | 85.5 | 75.3 | 88.5 |

| | | | |
|---|---|---|---|
| (*) : comparative. | | | |

## Claims

1. Tire comprising at least one structural element including a crosslinked elastomeric material obtained by crosslinking a crosslinkable elastomeric composition comprising:
(a) 100 phr of at least one elastomeric polymer;
(b) from 0.1 phr to 120 phr of at least one silica reinforcing filler;
(c) from 0.1 phr to 10 phr of at least one coupling agent containing at least one mercapto group;
(d) from 0.5 phr to 20 phr of at least one layered material having an individual layer thickness of from 0.01 nm to 30 nm.

2. Tire according to claim 1, wherein said crosslinkable elastomeric composition comprises from 20 phr to 90 phr of at least one silica reinforcing filler (b).

3. Tire according to claim 1 or 2, wherein said crosslinkable elastomeric composition comprises from 0.5 phr to 8 phr of at least one coupling agent containing at least one mercapto group (c).

4. Tire according to any one of the preceding claims, wherein said crosslinkable elastomeric composition comprises from 2 phr to 10 phr of at least one layered material (d).

5. Tire according to any one of the preceding claims, wherein said at least one layered material (d) has an individual layer thickness of from 0.2 nm to 15 nm.

6. Tire according to claim 5, wherein said at least one layered material (d) has an individual layer thickness of from 0.5 nm to 2 nm.

7. Tire according to any one of the preceding claims, comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said structural element is a tread band.

8. Tire according to any one of the preceding claims, wherein said at least one elastomeric polymer (a) is selected from diene elastomeric polymer (a₁) having a glass transition temperature below 20°C.

9. Tire according to any one of the preceding claims, wherein said at least one elastomeric polymer (a) is selected from elastomeric polymers of one or more monoolefins with an olefinic comonomer or derivatives thereof (a₂).

10. Tire according to any one of the preceding claims, wherein said at least one silica reinforcing filler (b) is selected from: pyrogenic silica, precipitated amorphous silica, wet silica (hydrated silicic acid), dry silica (anhydrous silicic acid), fumed silica, calcium silicate, or mixtures thereof.

11. Tire according to any one of the preceding claims, wherein said at least one coupling agent containing at least one mercapto group (c) is selected from compounds having the following general formula (I): 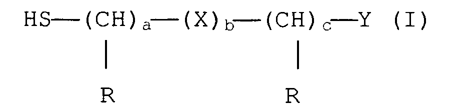 wherein:
- a + c is an integer of from 1 to 36, extremes included;
- R represents a hydrogen atom; a linear or branched C₁-C₆ alkyl group; a COOH group;
- X represents an oxygen atom; a sulfur atom; a NH group;
- when X represent an oxygen atom or a NH group, b is 0 or 1;
- when X represents a sulfur atom, b is 0, or an integer of from 1 to 4, extremes included;
- Y represents a polar group which is selected from: silane groups; acid groups; ester groups; amide groups; imide groups; nitro groups; hydroxy groups; mercapto groups; on condition that, when Y represents a mercapto group, at least one of the R substituents is a COOH group.

12. Tire according to any one of the preceding claims, wherein said at least one coupling agent containing at least one mercapto group (c) is selected from mercaptosilanes, mercaptans, or mixtures thereof.

13. Tire according to claim 12, wherein said mercaptosilanes are selected from compounds having the following general formula (II): 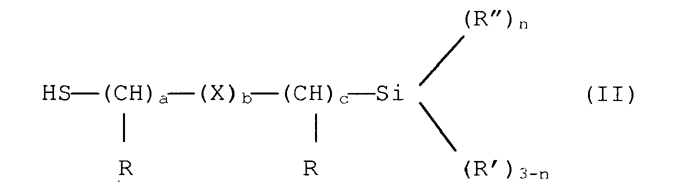 wherein:
- a, b, c, R and X, have the same meanings as above disclosed;
- R" represents a halogen atom such as chlorine, bromine, iodine; or a C₁-C₁₀ alkoxy group;
- R', which may be equal or different from each other, are selected from: C₁-C₃₆ alkyl groups; C₆-C₂₀ aryl groups; C₇-C₃₀ alkylaryl or arylalkyl groups; C₅-C₃₀ cycloaliphatic groups;
- n is an integer of from 1 to 3, extremes included.

14. Tire according to claim 13, wherein said mercaptosilanes having general formula (II) are: 1-mercaptomethyltriethoxysilane, 2-mercaptoethyltriethoxysilane, 3-mercaptopropyltriethoxysilane, 3-mercaptopropylmethyldiethoxysilane, 2-mercaptoethyltripropoxysilane, 18-mercaptooctadecyldiethoxychlorosilane, or mixture thereof.

15. Tire according to claim 12, wherein said mercaptanes are selected from compounds having the following general formula (III): 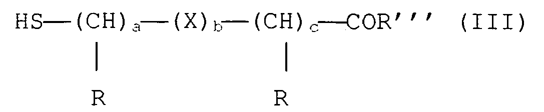 wherein:
- a, b, c, R and X, have the same meanings as above disclosed;
- R"' represents:
- a ORₐ group, wherein Rₐ represents a hydrogen atom; a metal such as lithium, sodium, potassium, magnesium, calcium; a linear or branched or cyclic C₁-C₃₆ alkyl group; a C₆-C₂₀ aryl group; a C₇-C₃₀ alkylaryl or arylalkyl group; a C₅-C₃₀ cycloaliphatic group; an ammonium ion;
- a NR₁R₂ group, wherein R₁ and R₂, represents a linear or branched or cyclic C₁-C₃₆ alkyl group; a C₆-C₂₀ aryl group; a C₇-C₃₀ alkylaryl or arylalkyl group; a C₅-C₃₀ cycloaliphatic group.

16. Tire according to claim 15, wherein said mercaptans having general formula (III) are: thioglycolic acid, 2-mercaptopropionic acid (thiolactic acid), 3-mercaptopropionic acid, 4-mercaptobutyric acid, mercaptoundecanoic acid, mercaptooctadecanoic acid, 2-mercaptosuccinic acid, 3,4-dimercaptosuccinic acid, 3-(3-mercaptopropylsulfanyl)propionic acid, 3-(3-mercaptopropyloxy) propionic acid, alkali, alkaline earth or ammonium salts thereof, or mixtures thereof.

17. Tire according to any one of the preceding claims, wherein said at least one layered material (d) is selected from: phyllosilicates such as smectites, such as montmorillonite, bentonite, nontronite, beidellite, volkonskoite, hectorite, saponite, sauconite; vermiculite; halloisite; sericite; aluminate oxides; hydrotalcite; or mixtures thereof.

18. Tire according to claim 17, wherein said at least one layered material (d) is treated with at least one compatibilizing agent which is selected from the quaternary ammonium or phosphonium salts having the following general formula (IV): 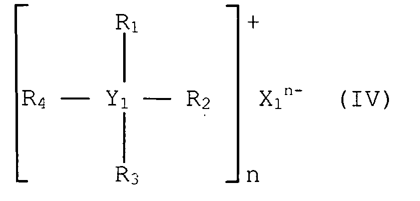 wherein:
- Y₁ represents N or P;
- R₁, R₂, R₃ and R₄, which may be equal or different from each other, represent a linear or branched C₁-C₂₀ alkyl or hydroxyalkyl group; a linear or branched C₁-C₂₀ alkenyl or hydroxyalkenyl group; a group -R₅-SH or -R₅-NH wherein R₅ represents a linear or branched C₁-C₂₀ alkylene group; a C₆-C₁₀ aryl group; a C₇-C₂₀ arylalkyl or alkylaryl group; a C₅-C₁₈ cycloalkyl group, said cycloalkyl group possibly containing hetero atom such as oxygen, nitrogen or sulfur;
- X₁ⁿ⁻ represents an anion such as the chloride ion, the sulphate ion or the phosphate ion;
- n represents 1, 2 or 3.

19. Tire according to any one of the preceding claims, wherein said crosslinkable elastomeric composition comprises (e) at least one silane coupling agent, other than said at least one coupling agent containing at least one mercapto group (c).

20. Tire according to claim 19, wherein said silane coupling agent is selected from those having at least one hydrolizable silane group which are identified by the following general formula (V):
(R₅)₃Si-CₙH₂-R₆ (V)
wherein the groups R₅, which may be equal or different from each other, are selected from: alkyl, alkoxy or aryloxy groups or from halogen atoms, on condition that at least one of the groups R₅ is an alkoxy or aryloxy group; n is an integer of from 1 to 6, extremes included; R₆ is a group selected from: nitroso, amino, epoxide, vinyl, imide, chloro, -(S)ₘCₙH₂ₙ-Si-(R₅)₃, or -S-COR₅, in which m and n are integers of from 1 to 6, extremes included and the groups R₅ are defined as above.

21. Tire according to claim 19 or 20, wherein said at least one silane coupling agent (e) is present in the crosslinkable elastomeric composition in an amount of from 0 phr to 10 phr.

## Patentansprüche

1. Reifen, umfassend mindestens ein Strukturelement, das ein vernetztes Elastomermaterial, erhalten durch Vernetzen einer vernetzbaren Elastomerzusammensetzung, einschliesst, umfassend:
(a) 100 phr mindestens eines elastomeren Polymers;
(b) 0,1 bis 120 phr mindestens eines Silicium-Verstärkungsfüllstoffs;
(c) 0,1 bis 10 phr mindestens eines Kupplungsmittels, das mindestens eine Mercaptogruppe enthält;
(d) 0,5 bis 20 phr mindestens eines beschichteten Materials mit einer unterschiedlichen Schichtdicke von 0,01 bis 30 nm.

2. Reifen gemäss Anspruch 1, worin die vernetzbare Elastomerzusammensetzung 20 bis 90 phr mindestens eines Silicium-Verstärkungsfüllstoffs (b) umfasst.

3. Reifen gemäss Anspruch 1 oder 2, worin die 8 vernetzbare Elastomerzusammensetzung 0,5 bis 8 phr mindestens eines Kupplungsmittels, das mindestens eine Mercaptogruppe (C) enthält umfasst.

4. Reifen gemäss irgendeinem der vorhergehenden Ansprüche, worin die vernetzbare Elastomerzusammensetzung 2 bis 10 phr mindestens eines beschichteten Materials (d) umfasst.

5. Reifen gemäss irgendeinem der vorhergehenden Ansprüche, worin das mindestens eine beschichtete Material (d) eine unterschiedliche Schichtdicke von 0,2 bis 15 nm hat.

6. Reifen gemäss Anspruch 5, worin das mindestens eine beschichtete Material (d) eine unterschiedliche Schichtdicke von 0,5 bis 2 nm hat.

7. Reifen gemäss irgendeinem der vorhergehenden Ansprüche, umfassend:
- eine Karkassenstruktur mit im wesentlichen ringförmiger Form mit gegenüberliegenden Seitenkanten, die mit entsprechenden rechten und linken Wulststrukturen verbunden sind, wobei die Wulststrukturen mindestens einen Wulstkern und mindestens einen Wulstfüllstoff umfassen;
- eine Gürtelstruktur, die in bezug zur Karkassenstruktur in einer radial äusseren Position angebracht ist;
- ein Laufflächenband, das radial über der Gürtelstrukur angebracht ist;
- ein Paar Seitenwände, die in bezug auf die Karkassenstruktur an gegenüberliegenden Seiten angebracht sind;
wobei das Strukturelement ein Laufflächenband ist.

8. Reifen gemäss irgendeinem der vorhergehenden Ansprüche, wobei das mindestens eine elastomere Polymer (a) aus einem elastomeren Dienpolymer (a1) mit einer Glasübergangstemperatur unterhalb 20°C ausgewählt ist.

9. Reifen gemäss irgendeinem der vorhergehenden Ansprüche, wobei das mindestens eine elastomere Polymer (a) aus elastomeren Polymeren eines oder mehrerer Monoolefin(s/e) mit einem Olefincomonomer oder Derivaten davon (a2) ausgewählt ist.

10. Reifen gemäss irgendeinem der vorhergehenden Ansprüche, wobei der mindestens eine Silicium-Verstärkungsfüllstoff (b) aus pyrogenem Siliciumdioxid, ausgefälltem amorphen Siliciumdioxid, nassem Siliciumdioxid (hydratisierte Kieselsäure), trockenem Siliciumdioxid (wasserfreier Kieselsäure), Quarzglas, Calciumsilicat oder Mischungen davon ausgewählt ist.

11. Reifen gemäss irgendeinem der vorhergehenden Ansprüche, wobei das mindestens eine Kupplungsmittel, das mindestens eine Mercaptogruppe (c) enthält, aus Verbindung der folgenden allgemeinen Formel (I) ausgewählt ist: 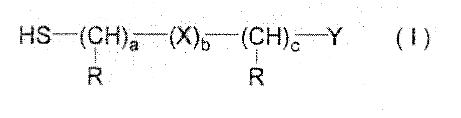 worin:
- a + c eine ganze Zahl von 1 bis 36 ist, Extremwerte eingeschlossen;
- R ein Wasserstoffatom, eine geradkettige oder verzweigte C₁₋₆-Alkylgruppe oder eine COOH-Gruppe darstellt;
- X ein Sauerstoffatom, ein Schwefelatom oder eine NH-Gruppe darstellt;
- wenn X ein Sauerstoffatom oder eine NH-Gruppe darstellt, b 0 oder 1 ist;
- wenn X ein Schwefelatom darstellt, b 0 oder eine ganze Zahl von 1 bis 4 ist, Extremwerte eingeschlossen;
- Y eine polare Gruppe darstellt, die aus Silangruppen, Säuregruppen, Estergruppen, Amidgruppen, Imidgruppen, Nitrogruppen, Hydroxygruppen oder Mercaptogruppen ausgewählt ist, unter der Bedingung, dass, wenn Y eine Mercaptogruppe darstellt, mindestens einer der Substituenten R eine COOH-Gruppe ist.

12. Reifen gemäss irgendeinem der vorhergehenden Ansprüche, wobei das mindestens eine Kupplungsmittel, das mindestens eine Mercaptogruppe (c) enthält, aus Mercaptosilanen, Mercaptanen oder Mischungen davon ausgewählt ist.

13. Reifen gemäss Anspruch 12, wobei die Mercaptosilane aus Verbindungen der folgenden allgemeinen Formel (II) ausgewählt sind: 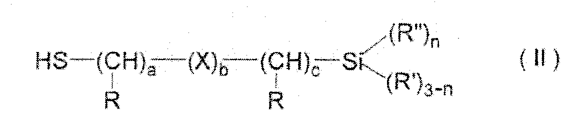 worin:
- a, b, c, R und X die gleichen Bedeutungen, wie oben beschrieben, haben;
- R" ein Halogenatom, wie Chlor, Brom, Iod, oder eine C₁₋₁₀-Alkoxygruppe darstellt;
- R', die gleich oder verschieden voneinander sein können, aus C₁₋₃₆-Alkylgruppen, C₆₋₂₀-Arylgruppen, C₇₋₃₀-Alkylaryl- oder -Arylalkylgruppen oder cycloaliphatischen C₅₋₃₀-Gruppen ausgewählt sind;
- n eine ganze Zahl von 1 bis 3 ist, Extremwerte eingeschlossen.

14. Reifen gemäss Anspruch 13, wobei die Mercaptosilane der allgemeinen Formel (II) 1-Mercaptomethyltrietboxysilan, 2-Mercaptoethyltriethoxysilan, 3-Mercaptopropyltriethoxysilsn, 3-Mercaptopropylmethyldiethoxysilan, 2-Mercaptoäthyltripropoxysilan, 18-Mercaptooctadecyldiethoxychlorsilan oder Mischungen davon sind.

15. Reifen gemäss Anspruch 12, wobei die Mercaptane aus Verbindungen der folgenden allgemeinen Formel (III) ausgewählt sind: 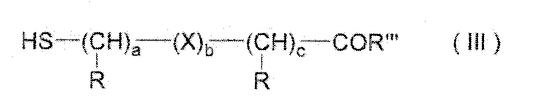 worin:
- a, b, c, R und X die gleichen Bedeutungen, wie oben beschrieben, haben;
- R"' darstellt:
- eine ORₐ-Gruppe, worin Rₐ ein Wasserstoffatom, ein Metall, wie Lithium, Natrium, Kalium, Magnesium, Calcium, eine geradkettige oder verzweigte oder cyclische C₁₋₃₆-Alkylgruppe, eine C₆₋₂₀-Arylgruppe, eine C₇₋₃₀-Alkylaryl- oder -Arylalkylgruppe, eine cycloaliphatische C₅₋₃₀-Gruppe oder ein Ammoniumion darstellt;
- eine NR₁R₂-Gruppe, worin R₁ und R₂ eine geradkettige oder verzweigte oder cyclische C₁₋₃₆-Alkylgruppe, eine C₆₋₂₀-Arylgruppe, eine C₇₋₃₀-Alkylaryl- oder -Arylalkylgruppe oder eine cycloaliphatischen C₅₋₃₀-Gruppe darstellt.

16. Reifen gemäss Anspruch 15, wobei die Mercaptane der allgemeinen Formel (III) Thioglycolsäure, 2-Mercsptopropionsäure (Thiomilchsäure), 3-Mercaptopropionsäure, 4-Mercaptobuttersäure, Mercaptoundecansäure, Mercaptooctadecansäure, 2-Mercaptobernsteinsäure, 3,4-Dimercaptobernsteinsäure, 3-(3-Mercaptopropylsulfanyl)propionsäure, 3-(3-Mercaptopropyloxy)propionsäure, Alkali-, Erdalkali- oder Ammoniumsalze davon oder Mischungen davon sind.

17. Reifen gemäss irgendeinem der vorhergehenden Ansprüche, wobei das mindestens eine beschichtete Material (d) aus Phyllosilicaten, wie Smektiten, wie Montmorillonit, Bentonit, Nontronit, Beldellit, Volkonskoit, Hectorit, Saponit, Sauconit, Vermiculit, Halloisit, Seriell, Aluminatoxiden, Hydrotalcit oder Mischungen davon ausgewählt ist.

18. Reifen gemäss Anspruch 17, wobei das mindestens eine beschichtete Material (d) mit mindestens einem Kompatibilisierungsmittel behandelt wird, das aus quartären Ammonium- oder Phosphoniumsalzen der folgenden allgemeinen Formel (IV) ausgewählt ist: 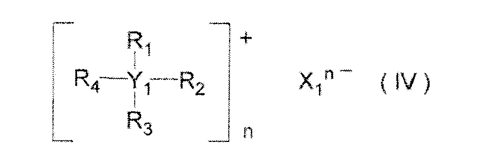 worin:
- Y₁ N oder P darstellt;
- R₁, R₂, R₃ und R₄, die gleich oder voneinander verschieden sein können, eine geradkettige oder verzweigte C₁₋₂₀-Alkyl- oder -Hydroxyalkylgruppe, eine geradkettige oder verzweigte C₁₋₂₀-Alkenyl- oder -Hydroxyalkenylgruppe, eine Gruppe -R₅-SH oder -R₅-NH, worin R₅ eine geradkettige oder verzweigte C₁₋₂₀-Alkylengruppe darstellt, eine C₆₋₁₈-Arylgruppe, eine C₇₋₂₀-Arylalkyl- order -Alkylarylgruppe oder eine C₅₋₁₈-Cycloalkylgruppe darstellen, wobei die Cycloalkylgruppe gegebenenfalls ein Heteroatom, wie Sauerstoff, Stickstoff oder Schwefel, enthält;
- X₁ⁿ⁻ ein Anion, wie das Chloridion, das Sulfation oder das Phosphation, darstellt;
- n 1, 2 oder 3 darstellt.

19. Reifen gemäss irgendeinem der vorhergehenden Ansprüche, wobei die vernetzbare Elastomerzusammensetzung mindestens ein anderes Silan-Kupplungsmittel (e) als das mindestens eine Kupplungsmittel, das mindestens eine Mercaptogruppe (c) enthält, umfasst.

20. Reifen gemäss Anspruch 19, wobei das Silan-Kupplungsmittel aus solchen mit mindestens einer hydrclysierbaren Silangruppe, die durch die folgende allgemeine Formel (V) identifiziert sind, ausgewählt ist:
(R₅)₃Si-CₙH₂ₙ-R₆ (V)
worin die Gruppen R₅, die gleich oder voneinander verschieden sein können, aus Alkyl-, Alkoxy- oder Aryloxygruppen oder Halogenatomen unter Bedingungen, dass mindestens eine der Gruppen R₅ eine Alkoxy- oder Aryloxygruppe ist, ausgewählt sind; n eine ganze Zahl von 1 bis 6 ist, Extremwerte eingeschlossen; R₆ eine Gruppe, ausgewählt aus Nitroso, Amino, Epoxid, Vinyl, Imid, Chlor, -(S)ₘCₙH₂ₙ-Si-(R₅)₃ oder -S-COR₅ ist, worin m und n ganze Zahlen von 1 bis 6 sind, Extremwerte eingeschlossen, und die Gruppen R₅ wie oben definiert sind.

21. Reifen gemäss Anspruch 19 oder 20, wobei das mindestens eine Silan-Kupplungsmittel (e) als vernetzbare Elastomerzususammensetzung in einer Menge von 0 bis 10 phr vorhanden ist.

## Revendications

1. Pneu comprenant au moines un élément de structure comportant un matériau élastomère réticulé obtenu par réticulation d'une compositions élastomère réticulable comprenant:
(a) 100 phr d'au moins un polymère élastomère;
(b) de 0,1 phr à 120 phr d'au moins une charge de renfort de silice;
(c) de 0,1 phr à 10 phr d'au soins un agent de couplage contenant au soins un groupe mercapto;
(d) de 0.5 phr à 20 phr d'au moins un matériau en couches ayant une épaisseur de couche individuelle de 0,01 nm à 30 nm.

2. Pneu selon la revendication 1, dans lequel ladite composition élastomère réticulable comprend de 20 phr à 90 phr d'au moins une charge de renfort de silice (b).

3. Pneu selon la revendication 1 ou 2, dans lequel ladite composition élastomère réticulable comprend de 0,5 phr à 8 phr d'au moins un agent de couplage contenant au moins un groupe mercapto (c).

4. Pneu selon l'une quelconque des revendication précédentes, dans lequel ladite composition élastomère réticulable comprend de 2 phr à 10 phr d'au moins une matériau sen couches (d),

5. Pneu selon rune quelconque des revendications précédentes, dans lequel ledit au moins un matériau sen couches (d) a une épaisseur de couche individuelle de 0,2 nm à 15 nm.

6. Pneu selon la revendication 5, dans lequel ledit au moines un matériau en couches (d) a une épaisseur de couche individuelle due 0,5 nm à 2 nm.

7. Pneu selon l'une quelconque des revendications précédentes, comprenant:
- une structure de carcasse de forme sensiblement toroïdale, ayant des bords latéraux opposés associés avec des structures de talon respectivement à droite et à gauche, lesdites structures de talon comprenant au moins une tringle et au moines un bourrage de talon;
- une structure de ceinture appliqués dans une position radialement externe par rapport à ladite structure de carcasse;
- une bande de roulement superposée radialement sur ladite structure de ceinturé;
- une plaire dé parois latérales appliquée latéralement sur les côtés opposés par rapport à ladite structure de carcasse;
dans lequel ledit élément structurel est une bande de roulement.

8. Pneu selon l'une quelconque des revendications précédentes, dans lequel ledit au moins un polymère élastomère (a) est choisi parmi des polymères élastomères diéniques (a₁) ayant une température de transition vitreuse inférieure à 20°C.

9. Pneu selon l'une quelconque des revendications précédente, dans lequel ledit au moins un polymère élastomère (a) est choisi parmi les polymère élastomères d'un ou plusieurs monooléfines avec un comonomère oléfinique ou leurs dérivés (a2).

10. Pneu selon l'une quelconque des revendications précédentes, dans lequel ladite au moins une charge de renfort de silice (b) est choisie parmi: silice pyrogénée, silice précipitée amorphes silice numide (acide silicique hydraté), silice sèche (acide anhydre siticique), silice pyrogénique, silicate de calcium, ou leurs mélanges.

11. Pneu selon l'une quelconque des revendications précédentes, dans lequel ledit au moins un agent de couplage contenant au moins un groupe mercapto (c) est choisi parmi les composés ayant la formule générale suivants (I): 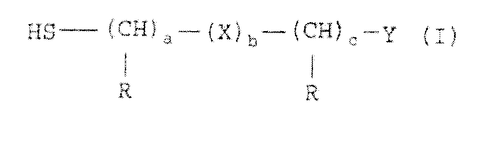 dans laquelle:
- a + c est un nombre sentier de 1 à 36, bornes incluses; R représente un atome d'hydrogène; un groupe alkyle C₁-C₆ linéaire ou ramifié; un groupe COOH;
- X représente un atome d'oxygène; un atome de soufre; un groupe NH;
- lorsque X représente un atome d'oxygène ou un groupe NH, b est 0 ou 1;
- lorsque X représente une atome de soufre, b est 0 ou un nombre sentier de 1 à 4, bornes incluses;
- Y représente un groupe polaire qui est choisi parmi: les groupes silane; groupes acide; groupes ester; groupes amide; groupes imide; groupes nitro; des groupes hydroxyle; groupes mercapto; à condition que, lorsque Y représente un groupe mercapto, au moins un des substituts de R soit un groupe COOH.

12. Pneu selon l'une quelconque des revendications précédentes, dans lequel ledit au moins un agent de couplage contenant au moins un groupe mercapto (c) est choisi parmi les mercaptosilanes, mercaptanes, ou leurs mélanges.

13. Pneu selon la revendication 12, **caractérisé en ce que** mercaptosilanes sont choisis parmi les composés ayant la formule générale (II): 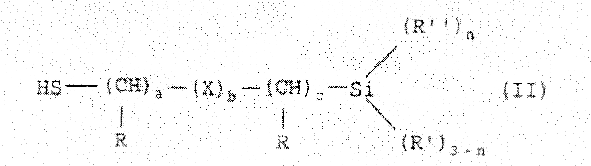 dans laquelle:
- a, b, c, R et X, ont les mêmes significations que décrit ci-dessus;
- R" représente un atome d'halogène tel que le chlore, le brome, l'iode; ou un groupe alcoxyle en C₁-C₁₀;
- R', qui peuvent être identiques ou différents les uns des autres, sont choisis parmi; les groupes alkyle C₁-C₃₆; les groupes aryle C₆-C₂₀; les groupes alkylaryle ou arylalkyle C₇-C₃₀; les groupes cycloaliphatique C₅-C₃₀;
- n est un entier de 1 à 3, extrêmes inclus.

14. Pneu selon la revendication 13, dans lequel lesdits mercaptosilanes de formule générale (II) sont: 1-mercaptomethyltriethoxysilane, 2-mercaptoethyltriéthoxysilane, 3-mercaptopropyltriéthoxysilane, 3-mercaptopropylmethyldiethoxysilane, 2-mercaptoéthyle-tripropoxysilane, 18-mercaptooctadecyldiethoxychlorosilane, ou leurs mélanges.

15. Pneu selon la revendication 12, dans lequel lesdits mercaptans sont choisais parmi les composés ayant la formule générale suivants (III): 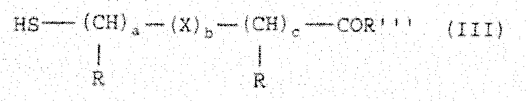 dans laquelle:
- a, b, c, R et X, ont les mêmes significations que décrit ci-dessus;
- R"' représente:
- un groupe ORₐ, dans lequel Rₐ représente un atome d'hydrogène; un métal tel que le lithium, sodium, potassium, magnésium, calcium; un groupe alkyle C₁-C₃₆ linéaire ou ramifié ou cyclique; un groupe aryle C₆-C₂₀; un groupe alkylaryle ou arylalkyle C₇-C₃₀; un groupe cycloaliphatique C₅-C₃₀; un ion ammonium;
- un groupe MR₁R₂, dans lequel R₁ et R₂ représentent un groupe alkyle C₁-C₃₆ linéaire ou ramifié ou cyclique; un groupe aryle C₆-C₂₀; un groupe alkylaryle ou arylalkyle C₇-C₃₀; un groupe cycloaliphatique C₅-C₃₀.

16. Pneu selon la revendication 15, dans lequel lesdits mercaptanes de formule générale (III) sont: acide thioglycolique, acide 2-mercaptopropionique (acide thiolactique), acide 3-mercaptopropionique, acide 4-mercaptobutyrique, acide mercaptoundécanoïque, acide mercaptooctadecanoïque, acide 2-mercaptosuccinique, acide 3,4-dimercaptosuccinique, acide 3-(3-mercaptopropylsulfanyle)propionique, acide 3-(3-mercaptopropyloxyle)propionique, alcalis, alcalino-terreux ou leurs sels d'ammonium, ou lueurs mélange.

17. Pneu selon l'une quelconque des revendications précédentes, dans lequel ledit au moins un matériau en couches (d) est choisi parmi:
phyllosilicates tels que les smectites, telles que montmorillonite, bentonite, nontronite, beidellite, volkonskoite, hectorite, saponite,
sauconite; vermiculite; halloisite; séricite; oxydes d'aluminate;
hydrotalcite; ou leurs mélanges.

18. Pneu selon la revendication 17, dans lequel ledit au moins un matériau en couches (d) est traité avec au moines un agent compatibilisant qui est choisi parmi les sels de phosphonium ou d'ammonium quaternaire ayant la formule générale (IV) suivante: 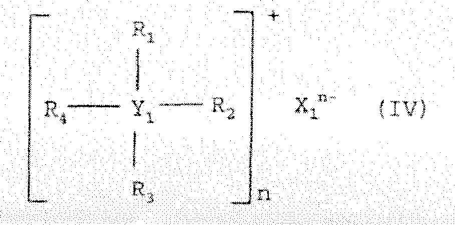 dans laquelle:
- Y1 représente N ou P;
- R₁, R₂, R₃ et R₄, qui peuvent être identiques ou déférents les uns des autres, représentent un groupe alkyle ou hydroxyalkyle C₁-C₂₀ linéaire ou ramifié; un groupe alcényle ou hydroxyalcényle C₁-C₂₀ linéaire ou ramifié; un groupe -R₅-SH ou -R₅-NH dans lequel R₅ représente un groupe alkylène C₁-C₂₀ linéaire ou ramifié: un groupe aryle C₆-C₁₈; un groupe arylalkyl ou alkylaryl C₁-C₂₀; un groupe cycloalkyl en C₅-C₁₈, ledit groupe cycloalkyle contenant éventuellement un hétéroatome tel que oxygène, azote ou soufre;
- X₁ⁿ⁻ représente un anion tel que l'ion chlorure, l'ion sulfate ou l'ion phosphate;
- n représente 1, 2 ou 3.

19. Pneu selon l'une quiconque des revendications précédentes, dans lequel ladite composition élastomère réticulable comprend (e) au moins un agent de couplage silane, autre que ledit au moins un agent couplant contenant au moins un groupe mercapto (c).

20. Pneu selon la revendication 19, dans lequel ledit agent couplant silane est choisi parmi ceux ayant au moins un groupe silane hydrolysable qui sont identifiés par la formule générale (V) suivante:
(R₅)₃Si-CₙH₂ₙ-R₆ (V)
dans laquelle les groupes R₅, qui peuvent être identique ou différents les uns des autres, sont choisais parmi: les groupes alkyle, alcoxyle ou aryloxy ou parmi les atomes d'halogène, à condition qu'au moins un des groupes R₅ soit un groupe alcoxyle ou aryloxyle; n est un nombre entier de 1 à 6, extrêmes inclus, R₅ est un groupe choisi parmi: nitroso, amino, époxyde, vinyle, imide, chloro, -(S)ₘCₙH₂ₙ-Si-(R₅)₃, ou -S-COR₅, dans lequel m et n sont des nombres entiers de 1 à 6, extrêmes inclus et les groupes R₅ sont définais comme précédemment.

21. Pneu selon la revendication 19 ou 20, dans lequel ledit au moins un agent coupant silane (e) est présent dans la composition élastomère réticulable dans une quantité allant de 0 phr à 10 phr.
